# EUROPÄISCHE PATENTSCHRIFT

(11) **EP 0 411 239 B1**
(45) Veröffentlichungstag und Bekanntmachung des Hinweises auf die Patenterteilung: **10.08.1994**
(21) Anmeldenummer: 90103294.6
(22) Anmeldetag: 21.02.1990
(51) Int. Cl.: H01R 13/502, H01R 23/10, H02K 5/22

(54) **Steckerträger zum Anbau an ein Aggregatgehäuse**
Connector support for mounting on a unit housing
Support de connecteur pour installation sur un boîtier d'appareil

(30) Priorität: 01.08.1989 DE 8914027 U
(43) Veröffentlichungstag der Anmeldung: 06.02.1991
(73) Patentinhaber: INTERCONNECTRON GMBH, D-94454 Deggendorf (DE)
(72) Erfinder: Schulz, Oswin, D-8360 Deggendorf (DE); Pfeiffer, Wolfgang, D-8351 Offenberg (DE); Frank, Herbert, D-7118 Künzelsau-Garnberg (DE)
(74) Vertreter: Schön, Theodor, Patent- und Zivilingenieur

(56) Entgegenhaltungen:
- DE-U- 8 228 161
- DE-U- 8 808 251

## Beschreibung

Die Erfindung bezieht sich auf einen Steckerträger zum Anbau an ein Aggregatgehäuse, insbesondere ein Motor-oder Getriebegehäuse, bestehend aus zwei im Winkel zueinander ausgerichteten, jeweils mit einer Durchgangsbohrung ausgestattetn Abschnitten, deren einer auf einer Wandung des Aggregategehäuses senkrecht stehend und mit einem Befestigungsflansch zur Befestigung am Aggregategehäuse ausgestattet ist und deren anderer annähernd parallel zur Umfangswandung des Aggregatgehäuses verlaufend ausgerichtet sowie mit einer Aufnahme- und Befestigungseinrichtung für einen ein Isoliergehäuse aufweisenden Stecker versehen ist, wobei die Abschnitte des zweiteilig ausgebildeten Steckerträgers gelenkig und in einer zwischen den beiden Abschnitten bildenden Trennebene und voneinander trennbar miteinander verbunden sind.

Für die Führung elektrischer Leitungen von in einem Aggregat, insbesondere einem Motor oder einem Getriebe einzusetzenden Meßgeräten oder Gebern zu zugehörigen Verarbeitungs- oder Anzeigeeinrichtungen ist es gelegentlich erforderlich die Meßgeräte oder Geber mit den Verarbeitungs-oder Anzeigeeinrichtungen über Steckverbindungen zu koppeln und die aus dem Aggregatgehäuse herausführenden Leitungen in einem an das Aggregatgehäuse anzuschließenden, rechtwinkelig abgewinkelten Steckerträger unterzubringen, wobei sich erhebliche Schwierigkeiten dadurch ergeben, daß der mit einem Isoliergehäuse ausgestattete Stecker nicht von innen her durch den abgewinklelten Steckerträger hindurchgeführt werden kann.

Zur Bewältigung dieser Problematik ist bereits ein Steckerträger der eingangs bezeichneten Art aus dem DE-U-88 08 251.2 bekannt. Bei einer solchen Ausbildung eines Steckerträgers müssen im Rahmen der Herstellung der elektrischen Anschlüße die Leitungen zunächst durch den einen Abschnitt des Steckerträgers hindurchgeführt und anschließend an den eigentlichen Stecker angeschlossen, sowie zusammen mit dem Stecker in den einen Abschnitt des Steckerträgers zurückgeschoben werden, bevor schließlich die beiden Abschnitte des Steckerträgers in einer zueinander winkeligen Ausrichtung miteinander verbunden werden können. Diese bekannte Bauart eines Steckerträgers ist mit dem Nachteil behaftet, daß zwischen Geber und Stecker verhältnismäßig lange Drahtanschlüsse vorhanden sein müssen, um ein Einführen des Steckers in den zweiten abgewinkelten Abschnitt des Steckerträgers zu ermöglichen, wobei die Drahtanschlüsse für den Betrieb des Gebers nicht erforderlich sind und vielmehr nach der Montage des Steckers zusammengeschoben und verstaut werden müssen, wozu naturgemäß im Aggregatgehäuse ein entsprechender Stauraum vorgesehen sein muß, der dort aber nur schwer zu schaffen ist und außerdem eine Vergrößerung des Aggregatgehäuses mit sich bringt.

Mit dem gleichen Nachteil behaftet ist auch eine andere bekannte Bauart eines Steckerträgers, bei der der winkelförmig und zweiteilig ausgebildete Steckerträger diagonal zur Abwinkelung seiner beiden Abschnitte trennbar ist ausgeführt ist, um das Einführen insbesondere des Isoliergehäuses des Steckers durch den Steckerträger zu erleichtern, da auch hier verhältnismäßig lange Drahtanschlüsse vorhanden sein müssen, lediglich um ein Einführen des eigentlichen Steckers in den zweiten abgewinkelten Abschnitt des Steckerträgers zu ermöglichen.

Der Erfindung liegt daher die Aufgabe zugrunde einen hinsichtlich seiner Anbauabmessungen Standartgrößen entsprechenden, an einem Aggregatgehäuse befestigbaren Steckerträger zu schaffen, welcher es bei geringer Länge und geringstem Bedarf an Stauraum für die Anschlußverdrahtung des Steckers und mit geringem Arbeitsaufwand gestattet den Stecker samt Isolierkörper vom Inneren des Aggregategehäuses her im Steckerträger zu montieren.

Diese Aufgabe wird dadurch gelöst, daß die Trennebene durch die Winkelhalbierende der Abwinkelung gebildet ist und daß die trennbare Verbindung der beiden Abschnitte durch eine am einen Abschnitt ausgebildete und parallel zu dessen Trennebene zurückgebogenen Nase und einen diese untergreifenden plattenförmigen Ansatz am anderen Abschnitt des Steckerträgers gebildet ist, wobei der plattenförmige Ansatz an seinem freien Rand zueinander geneigte Schrägflächen aufweist. Dies ermöglicht es, daß die an die Trennebene angrenzenden Trennflächen der beiden entlang einer in der Winkelhalbierenden liegenden Trennebene voneinander trennbaren Abschnitte des Steckerträgers glattflächig und eben auszuführen und in wenigstens einer der beiden Trennflächen eine Nutausnehmung zur Aufnahme eines Dichtringes bzw. einer Dichtung anzuordnen.

Diese Ausbildung des Steckerträgers ermöglicht es den mit einem Isoliergehäuse ausgestatteten Stecker in einer geradlinigen Schiebebewegung zunächst durch den am Aggregategehäuse befestigten Abschnitt und sodann um den erforderlichen Betrag in einer ebenfalls im wesentlichen geradlinigen Schiebebewegung durch den zweiten Abschnitt des Steckerträgers hindurchzuführen und mittels eines von der Trennfläche her in diesen einzuführenden Befestigungselementes, wie beispielsweise eines Sprengringes oder dergl. in diesem festzulegen und sodann die beiden Abschnitte des Steckerträgers mit ihren Trennflächen gegeneinander zu klappen und miteinander zu verbinden. Dabei brauchen die Anschlußleitungen für den Stecker nur eine verschwindend geringe Überlänge aufzuweisen, die beim Schließen des Steckerträgers leicht in dessen beiden Abschnitten gestaut werden kann. Ein weiterer Vorteil des erfindungsgemäßen Steckerträgers wird ferner darin gesehen, daß sein in die Öffnung des Aggregatgehäuses eingreifender Teil und ebenso sein quadratischer Befestigungsflansch den üblichen Abmessungen starrer Leitungsträger entspricht, so daß er im Austausch zu Standart Bauelementen eingesetzt werden kann.

In anderen Einzelausgestaltung kann vorgesehen sein, daß eine Gelenkverbindung der beiden Abschnitte des Steckerträgers eine feststehende Gelenkachse aufweist, wodurch eine bleibende Verbindung zwischen den beiden Abschnitten geschaffen werden könnte.

Erfindungsgemäß ist dabei weiterhin vorgesehen, daß der an das Aggregat anzuschließende Abschnitt einen quadratischen Befestigungsflansch mit wenigstens drei, insbesondere vier Durchgangsbohrungen für Befestigungsschrauben aufweist und daß der zweite mit dem ersten Abschnitt zu verbindende Abschnitt in einem radial zu seiner Achse auskragenden Bereich wenigstens eine Durchgangsbohrung für den Durchtritt einer Befestigungsschraube aufweist, wobei die Durchgangsbohrung im zweiten Abschnitt so angeordnet ist, daß sie bei lagerichtig zusammengestzten Abschnitten mit einer der Durchgangsbohrungen im Befestigungsflansch des an das Aggregat anzuschließenden Abschnittes fluchtet, wobei die Durchgangsbohrung bzw. Durchgangsbohrungen im zweiten Abschnitt in den radial ausladenden Bereichen des zweiten Abschnittes asymetrisch zum Grundriß der Trennfläche angeordnet sind. Zur Vermeidung von Verspannungen kann in einer besonderen Ausgestaltung der Erfindung ferner vorgesehen sein, daß dem radial auskragenden Bereich des zweiten Abschnittes ein am ersten Abschnitt ausgebildeter mit einer Durchgangsbohrung versehener Auflagesockel zugeordnet ist.

Andererseits kann hierzu aber auch vorgesehen sein, daß entweder wenigstens eine der dem ersten Abschnitt zugeordneten Befestigungsschrauben als Stehbolzen ausgebildet und mit einem die Durchgangsbohrung im radial auskragenden Bereich des zweiten Abschnittes durchsetzenden Gewindebolzens versehen ist, oder daß wenigstens eine der dem ersten Abschnitt zugeordneten Befestigungsschrauben als Stehbolzen ausgebildet und mit einem die Durchgangsbohrung im radial auskragenden Bereich des zweiten Abschnittes durchsetzenden Gewindebolzens versehen ist.

In Verbindung mit einer Ausbildung eines Steckerträgers nach den vorstehend aufgezeigten Merkmalen ist weiterhin vorgesehen, daß die beiden Abschnitte des Steckerträgers im Bereich der Trennebene des Gehäuses mit senkrecht zur Trennfläche ausgerichteten und wechselweise angeordneten Ausnehmungen und Vorsprüngen versehen sind, die ein lagenrichtiges Zusammensetzen der beiden Abschnitte sicherstellen. Insbesondere kann dabei eine der wechselseitig angeordneten Ausnehmungs-Vorsprungspaarungen im Bereich der Gelenkverbindung der beiden Abschnitte des Steckerträgers angeordnet sein.

In einer besonderen Ausführungsform der Erfindung weisen die die Trennebene zwischen sich einschließenden Trennflächen einen in der Draufsicht etwa sternförmigen Grundriß mit einer mittigen ovalen Durchgangsöffnung auf, wobei die Strahlenspitzen des sternförmigen Grundrisses entlang geradliniger Linien abgeschnitten sind und am einen der beiden Abschnitte an einer der Stahlenspitzen des Grundrisses der Trennfläche eine zur Trennebene hin zurückgebogene und diese mit einem Abstand übergreifende Nase ausgebildet ist, welche von einem in Verlängerung der Trennebene am anderen Abschnitt angeordneten plattenförmigen Fortsatz untergriffen ist.

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine teilweise aufgebrochende Seitenansicht eines erfindungsgemäßen Steckerträgers;
- Figur 2: eine Draufsicht auf den Steckerträger gemäß Figur 1;

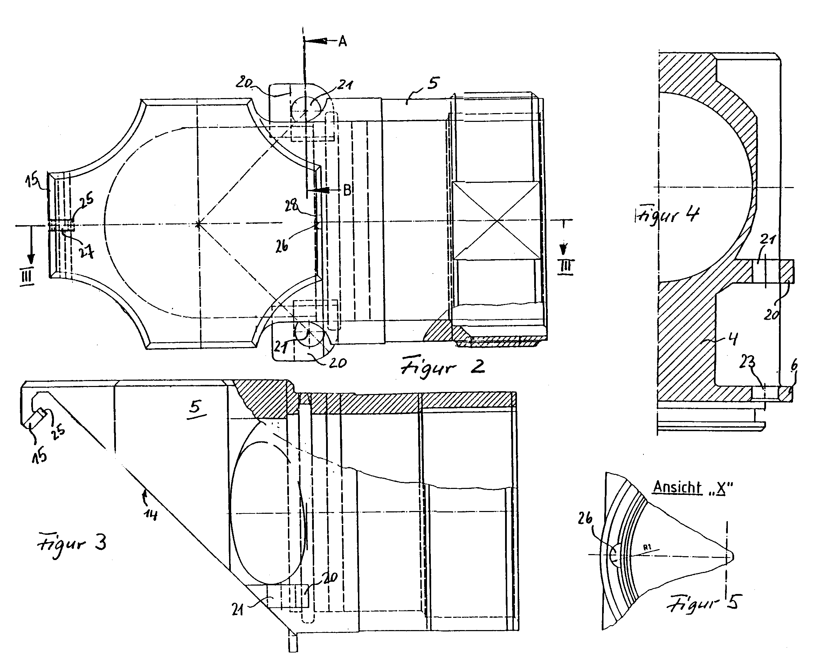

- Figur 3: einen Schnitt durch die Figur 2 entlang der Linie III - III;

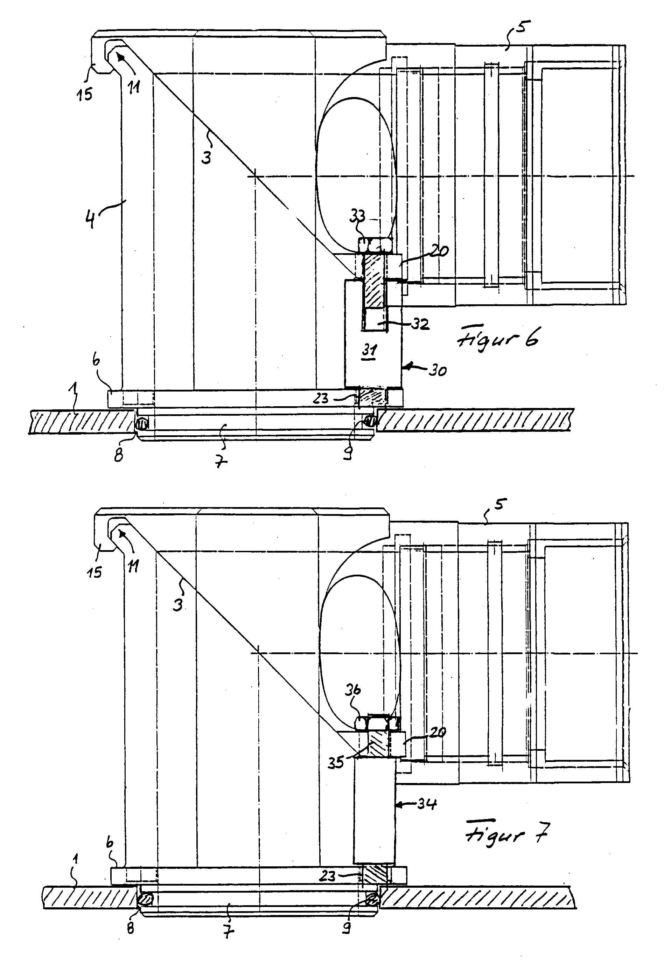

- Figur 4: einen Teilschnitt durch den zweiten Abschnitt des Steckerträgers gemäß der Linie A - B in Figur 2;
- Figur 5: eine Einzelheit aus Figur 1 im vergrößerten Maßstab;
- Figur 6: eine Seitenansicht gemäß Figur 1 zu einer anderen Ausführungsform;
- Figur 7: eine Seitenansicht gemäß Figur 1 zu einer weiteren Ausführungsform;
- Figur 8: eine schematische Darstellung der Montage des erfindungsgemäßen Steckerträgers.

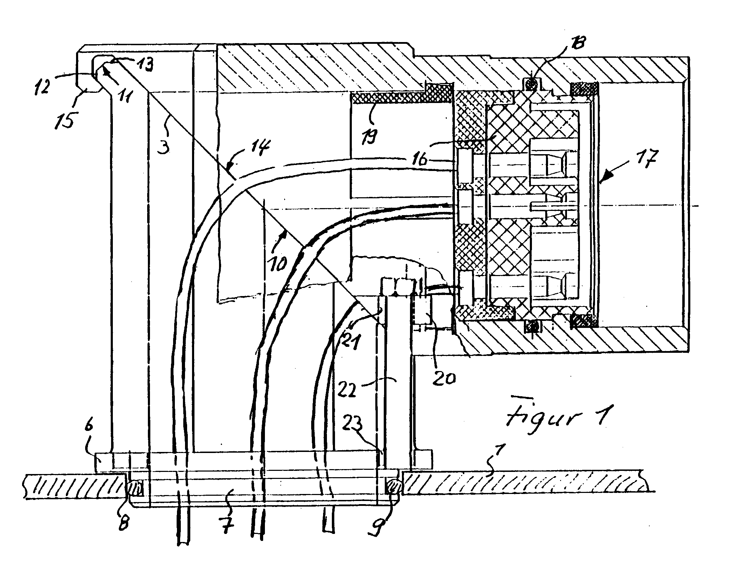

Auf die Wandung 1 eines im übrigen nicht näher dargestellten Gehäuses eines Aggregates, Motor oder Getriebe, ist ein parallel zur Gehäusewandung 1 abgewinkelter Steckerträger 2 aufgesetzt. Der Steckerträger 2 ist entlang einer Trennebene 3 in zwei Abschnitte 4 und 5 unterteilt, wobei der eine Abschnitt 4 des Steckerträgers 2 vermittels eines Flansches 6 auf die Wandung 1 des Gehäuses aufgesetzt und an dieser mittels in der Zeichnung nicht dargestellter Schraubenbolzen befestigt ist und mit einem Ansatz 7 in eine Ausnehnung 8 in der Wandung 1 des Gehäuses eingreift und in dieser mittels eines O-Ringes 9 abgedichtet ist. Der von der Gehäusewandung 1 aufragende Teil des Abschnittes 1 ist oberendig durch eine Trennfläche 10 begrenzt, an welche zu dieser fluchtend und einseitig ein plattenförmiger Ansatz 11 angeschlossen ist, dessen freier Rand mit gegeneinander geneigten Schrägflächen 12 und 13 versehen ist. Der zweite Abschnitt 5 des Steckerträgers weist eine zur Trennfläche 10 des ersten Abschnittes parallel verlaufende Trennfläche 14 auf, an die einseitig eine parallel zur Ebene der Trennfläche 14 zurückgebogene Nase 15 angeschlossen ist, die bei zusammengefügtem ersten 4 und zweiten Abschnitt 5 des Steckerträgers zur Bildung eines Gelenkes von dem plattenförmigen Ansatz 11 am ersten Abschnitt 4 untergriffen wird. Im zweiten Abschnitt 5 des Steckerträgers ist, wie insbesondere aus der Darstellung der Figur 1 ersichtlich ein ein Isoliergehäuse 16 aufweisender Stecker 17 angeordnet, der gegen die Wandung des zweiten Abschnittes 5 durch einen O-Ring 18 abgedichtet und im zweiten Abschnitt 5 vermittels eines Spannringes 19 festgelegt ist. Mit einem in der Zeichnung nicht dargestellten, an das im Aggregatgehäuse untergebrachte Aggregat angeschlossenen Geber ist der Stecker 17 vermittels elektrischer Leitungen 19 verbunden, welche die beiden Abschnitte 4 und 5 des Steckerträgers durchsetzen.

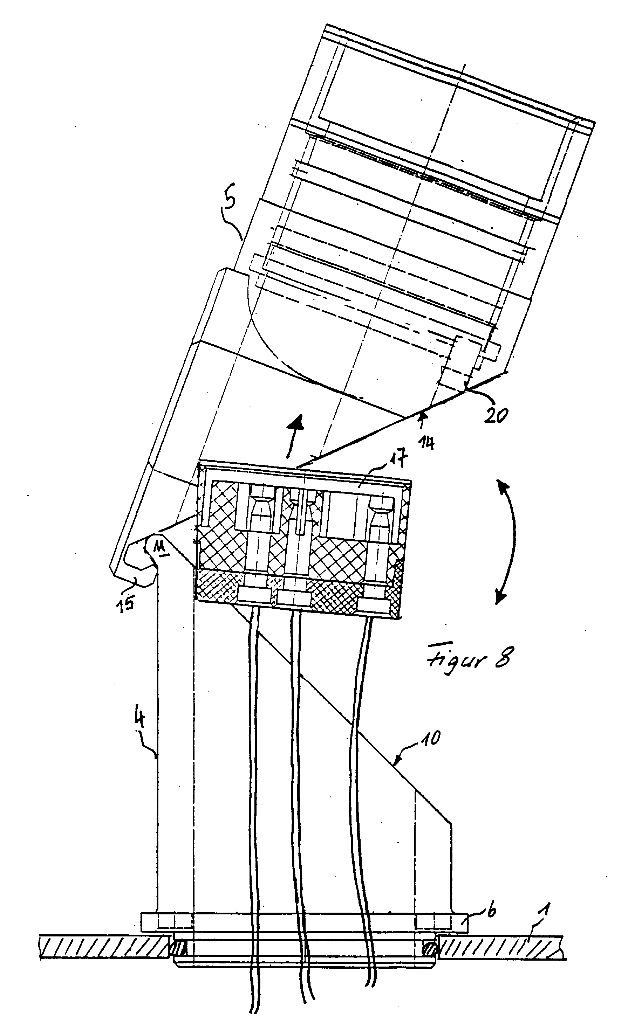

Der zweite Abschnitt 5 ist ferner mit radial ausladenden Bereichen 20 versehen, die Durchgangsbohrungen 21 für den Durchtritt von Befestigungsschrauben 22 aufweisen, die ihrerseits ferner auch die Durchtrittsbohrungen 23 im Befestigungsflansch 6 durchgreifen. Dabei sind die Durchgangsbohrungen 21 in den radial ausladenden Bereichen 20 des zweiten Abschnittes so angeordnet, daß sie bei lagerichtig zusammengesetztem ersten 4 und zweiten Abschnitt 5 mit den Durchtrittsbohrungen 23 im Befestigungsflansch 6 des ersten Abschnittes 4 fluchten. Zur Sicherung eines lagenrichtigen Zusammensetzens sind die beiden Abschnitte 4 und 5 des Steckerträgers mit im Bereich ihrer Trennflächen wechselweise angeordneten Vorsprüngen 25, 26 und Ausnehmungen 27, 28 versehen, wobei der Vorsprung 25 an der Innenfläche der Nase 15 des zweiten Abschnittes 5 und die Ausnehmung 27 am plattenförmigen Ansatz 11 des ersten Abschnittes 4 des Steckerträgers angeordnet ist und wobei ferner die zweite Ausnehmungs-Vorsprungspaarung 26/28 der ersten 25/27 gegenüberliegend angeordnet ist.
Bei der in der Figur 6 gezeigten Ausführungsform ist die Befestigungsschraube 22 durch einen Stehbolzen 30 ersetzt, welcher in einem Schaftteil 31 oberendig mit einer Sackloch-Gewindebohrung 32 versehen ist, in welche eine die Durchgangsbohrung 21 durchgreifende Schraube 33 einschraubbar ist und welcher seinerseits mit einem Gewindefortsatz die Durchtrittsbohrung 23 im Befestigungsflansch 6 durchgreift.

Bei dem in der Figur 7 dargestellten Ausführungsbeispiel ist die Befestigungsschraube 22 durch einen Stehbolzen 34 ersetzt, welcher mittels eines Gewindezapfens 35 die Durchgangsbohrung 21 im radial gerichteten Bereich 20 des zweiten Abschnittes 5 des Steckerträgers durchgreift und an welchem der zweite Abschnitt 5 mittels einer Mutter 36 befestigt ist. Der Stehbolzen 34 durchgreift unterendig mit einem Gewindefortsatz die Durchtrittsbohrung 23 im Befestigungsflansch 6 des Abschnittes 4.

In der Figur 8 ist schließlich noch schematisch die Montage des Steckerträgers dargestellt. Dabei wird zunächst der Abschnitt 4 über die Durchtrittsbohrung im linken Bereich seines Befestigungsflansches durchgreifende Befestigungsschrauben vorläufig am Aggregatgehäuse befestigt und anschließend der Abschnitt 5 um das Gelenk 11/15 nach oben geschwenkt. In dieser Stellung des Steckerträgers wird der Stecker 17 vom Innern des Aggregatgehäuses her in einer geradlinigen Schiebebewegung durch den Abschnitt 4 hindurchgeschoben und anschließend in den Abschnitt 5 ebenfalls in einer im wesentlichen geradlinigen Schiebebewegung in den Abschnitt 5 eingeschoben und in diesem schließlich festgelegt. Anschließend wird der Abschnitt 5 in Pfeilrichtung nach unten geklappt bis seine Trennfläche 14 auf der Trennfläche 10 des Abschnittes 4 aufliegt. Alsdann werden beide Abschnitte gemeinsam durch die Befestigungsschrauben 22 endgültig am Aggregatgehäuse festgelegt.

## Patentansprüche

1. Steckerträger (2) zum Anbau an ein Aggregatgehäuse (7), insbesondere ein Motor-oder Getriebegehäuse, bestehend aus zwei im Winkel zueinander ausgerichteten, jeweils mit einer Durchgangsbohrung ausgestatteten Abschnitten (4,5), deren einer (4) auf einer Wandung (1) des Aggregategehäuses senkrecht stehend und mit einem Befestigungsflansch (6) zur Befestigung am Aggregategehäuse ausgestattet ist und deren anderer (5) annähernd parallel zur Umfangswandung des Aggregategehäuses verlaufend ausgerichtet sowie mit einer Aufnahme- und Befestigungseinrichtung für einen ein Isoliergehäuse (16) aufweisenden Stecker (17) versehen ist, wobei die Abschnitte des zweiteilig ausgebildeten Steckerträgers gelenkig und in einer zwischen den beiden Abschnitten bildenden Trennebene (3) und voneinander trennbar miteinander verbunden sind, dadurch gekennzeichnet, daß die Trennebene durch die Winkelhalbierende der Abwinkelung gebildet ist, und daß die trennbare Verbindung der beiden Abschnitte (4 und 5) durch eine am einen Abschnitt (5) ausgebildete und parallel zu dessen Trennebene (3) zurückgebogenen Nase (15) und einen diese untergreifenden plattenförmigen Ansatz (11) am anderen Abschnitt (4) des Steckerträgers gebildet ist, wobei der plattenförmige Ansatz (11) an seinem freien Rand zueinander geneigte Schrägflächen (12,13) aufweist.

2. Steckerträger nach Anspruch 1, dadurch gekennzeichnet, daß die beiden Abschnitte (4 und 5) im Bereich der Trennebene (3) des Steckerträgers mit jeweils senkrecht zu ihren Trennflächen (10 bzw. 14) ausgerichteten und wechselweise angeordneten Ausnehmungen (25,26) und Vorsprüngen (27, 28) versehen sind, die ein lagenrichtiges Zusammensetzen der beiden Abschnitte (4 und 5) sicher stellen.

3. Steckerträger nach Anspruch 1 und 2, dadurch gekennzeichnet, daß eine Ausnehmung (25) und ein Vorsprung (27) im Bereich eines die beiden Abschnitte (4 und 5) miteinander verbindenden Gelenkes angeordnet sind.

4. Steckerträger nach Anspruch 1 bis 3, dadurch gekennzeichnet, daß in der Trennfläche (10 bzw. 14) wenigstens eines Abschnittes ( 4 bzw. 5) eine umlaufende Nut zur Aufnahme eines Dichtringes angeordnet ist.

5. Steckerträger nach Anspruch 1 bis 4, dadurch gekennzeichnet, daß der an das Aggregat anzuschließende Abschnitt (4) einen quadratischen Befestigungsflansch (6) mit wenigstens drei, insbesondere vier Durchgangsbohrungen für Befestigungsschrauben aufweist und daß der zweite (5) mit dem ersten Abschnitt (4) zu verbindende Abschnitt in einem radial zu seiner Achse auskragenden Bereich (20) wenigstens eine Durchgangsbohrung (21) für den Durchtritt einer Befestigungsschraube (22) aufweist, wobei die Durchgangsbohrung (21) im zweiten Abschnitt (5) so angeordnet ist, daß sie bei lagerichtig zusammengestezten Abschnitten (4 und 5) mit einer der Durchtrittsbohrungen im Befestigungsflansch (6) des an das Aggregat anzuschließenden Abschnittes (4) fluchtet.

6. Steckerträger nach Anspruch 1 bis 5, dadurch gekennzeichnet, daß dem radial auskragenden Bereich (20) des zweiten Abschnittes (5) ein am ersten Abschnitt (4) ausgebildeter mit einer Durchgangsbohrung versehener Auflagesockel zugeordnet ist.

7. Steckerträger nach Anspruch 1 bis 6, dadurch gekennzeichnet, daß wenigstens eine der dem ersten Abschnitt (4) zugeordneten Befestigungsschrauben als Stehbolzen (30) ausgebildet und mit einer Sacklochbohrung (32) zur Aufnahme einer die Durchgangsbohrung (21) im radial auskragenden Bereich (20) des zweiten Abschnittes (5) durchsetzenden Schraubenbolzens (33) versehen ist.

8. Steckerträger nach einem oder mehreren der vorstehenden Ansprüche 1 bis 7, dadurch gekennzeichnet, daß wenigstens eine der dem ersten Abschnitt (4) zugeordneten Befestigungsschrauben als Stehbolzen (34) ausgebildet und mit einem die Durchgangsbohrung (21) im radial auskragenden Bereich (20) des zweiten Abschnittes (5) durchsetzenden Gewindezapfen (35) versehen ist.

9. Steckerträger nach einem oder mehreren der vorstehenden Ansprüche, dadurch gekennzeichnet, daß bei einer Anordnung, bei der die Trennebene für die beiden Teile des Steckerträgers die Winkelhalbierende der Abwinkelung des Steckerträgers bildet und die Trennflächen glattflächig ausgebildet sind, die Trennflächen einen in der Draufsicht etwa sternförmigen Grundriß mit einer mittigen ovalen Durchgangsöffnung aufweisen und die Strahlenspitzen der Grundrißform entlang geradliniger Verläufe abgeschnitten sind.

10. Steckerträger nach Anspruch 1 und 2, dadurch gekennzeichnet, daß am einen Abschnitt eine eine Gelenkhälfte bildende Nase angeordnet und an dem anderen Abschnitt wenigstens im Bereich einer der Strahlenspitzen der sterförmigen Grundrißform ein als beidseitig ebene Platte ausgebildetes Teil angeschlossen ist.

## Claims

1. A plug carrier (2) for mounting on an appliance housing (7), particularly a motor or gear-box housing, consisting of two portions (4, 5) each of which is equipped with a through-bore and which are aligned at an angle to each other, of which one (4) is situated at right-angles to a wall (1) of the appliance housing and which has a fixing flange (6) for fitment on the appliance housing while the other (5) is approximately parallel with the peripheral wall of the appliance housing, and with a housing and fixing means for a plug (17) having an insulating housing (16), whereby the portions of the two-part plug carrier are articulatingly connected and in one plane (3) of separation between the two portions and are connected separably to each other, characterised in that the plane of separation is formed by the bisector of the angle and in that the separable connection between the two portions (4 and 5) is formed by a nose (15) constructed on the portion (5) and bent back parallel with this plane of separation (3) and is formed by a plate-shaped projection (11) engaging beneath these and formed on the other portion (4) of the plug carrier, whereby the plate-shaped projection (11) having mutually inclined chamfered surfaces (12, 13) on its free edge.

2. A plug carrier according to Claim 1, characterised in that the two portions (4 and 5) are provided in the region of the plane of separation (3) of the plug carrier with in each case, orientated at right-angles to their separation surfaces (10, 14), alternately disposed recesses (25, 26) and projections (27, 28) which ensure a correctly positioned joining of the two portions (4 and 5).

3. A plug carrier according to Claims 1 and 2, characterised in that the recess (25) and a projection (27) are disposed in the region of an articulation connecting the two portions (4 and 5) to each other.

4. A plug carrier according to Claims 1 to 3, characterised in that in the surface of separation (10, 14) of at least one portion (4, 5) there is an encircling groove to accommodate a sealing ring.

5. A plug carrier according to Claim 1 to 4, characterised in that the portion (4) adjacent the assembly comprises a quadratic fixing flange (6) having at least three and in particular four through-bores for fixing screws and in that the second portion (5) which is to be connected with the first portion (4) is disposed in an area (2) projecting radially in relation to its axis, having at least one through-bore (21) for the passage of the fixing screw (22), whereby the through-bore (21) is so disposed in the second portion (5) that, with positionally correctly assembled portions (4 and 5), it is aligned with one of the through-bores in the fixing flange (6) of the portion (4) which is adjacent the appliance.

6. A plug carrier according to Claim 1 to 5, characterised in that there is associated with the radially projecting portion (20) of the second portion (5) and constructed on the first portion (4) a supporting base which is provided with a through-bore and which is constructed on the first portion (4).

7. A plug carrier according to Claim 1 to 6, characterised in that at least one of the fixing screws associated with the first portion (4) is constructed as a stud bolt (30) and is provided with a blind hole bore (32) to accommodate a screw bolt (33) which passes through the through-bore (21) in the radially projecting portion (20) of the screw bolt (33) traversing the second portion (5).

8. A plug carrier according to one or more of the preceding Claims 1 to 7, characterised in that at least one of the fixing screws associated with the first portion (4) is constructed as a stud bolt (34) and is provided with a screw-threaded stud (35) passing through the through-bore (21) in the radially projecting portion (20) of the second part (5).

9. A plug carrier according to one or more of the preceding Claims, characterised in that in the case of an arrangement in which the plane of separation for the two parts of the plug carrier forms the angular bisector of the developed pattern of the plug carrier and, in plan view, when the separating surfaces are smooth, the separating surfaces have a substantially stellate outline with a central oval through-way while the peaks of the beams of the basic form are cut off along a straight line.

10. A plug carrier according to Claims 1 and 2, characterised in that there is a nose on one portion, forming half of the articulation while there is connected to the other portion, at least in the region of one of the beam peaks of the basic stellate form, a part which is constructed as a plane panel on both sides.

## Revendications

1. Support de connecteur (2) à installer sur un boîtier (7) de sous-ensemble, en particulier un boîtier de moteur ou d'engrenage, qui se compose de deux segments (4), (5) déterminant entre eux un angle, pourvus chacun d'un alésage, dont l'un (4) est disposé perpendiculairement sur l'une des parois (1) du boîtier de sous-ensemble (7) et comporte une pièce de fixation (6) permettant sa fixation sur ledit boîtier (7) et dont l'autre (5) est orienté à peu prés parallèlement à la paroi dudit boîtier (7) et comporte un dispositif de réception et de fixation pour un connecteur avec un boîtier d'isolation (16), où lesdits segments (4), (5) du support de connecteur (2) en deux parties sont assemblés de manière amovible l'un avec l'autre par une articulation située dans le plan de séparation (3) desdits segments *caractérisé en ce que* le plan de séparation est déterminé par la bissectrice de l'angle compris entre les deux segments (4), (5) du support de connecteur et *en ce que* l'assemblage amovible desdits segments (4), (5) est constitué d'un nez (15) prolongeant le segment (5) et replié parallèlement au plan de séparation (3), et, d'un prolongement (11) du segment (4), en forme de plaque, s'engageant sous ledit nez (15) et dont le bord libre présente des surfaces inclinées (12), (13) l'une sur l'autre.

2. Support de connecteur selon la revendication 1 *caractérisé en ce que* les segments (4), (5) comportent dans la zone du plan de séparation (3) dudit support des évidements (25), (26) et des saillies (27), (28) perpendiculaires aux surfaces de séparation (10), (14) desdits segments, disposés alternativement et garantissant un assemblage avec un positionnement réciproque exact desdits segments (4), (5).

3. Support de connecteur selon les revendications 1 et 2 *caractérisé en ce que* l'un des évidements (25) et l'une des saillies (27) sont disposés dans la zone de l'articulation assurant l'assemblage des segments (4), (5) du support de connecteur.

4. Support de connecteur selon les revendications 1 à 3 *caractérisé en ce que* au moins l'une des surfaces de séparation (10), (14) des segments (4), (5) comporte une rainure continue destinée à recevoir un joint d'étanchéité.

5. Support de connecteur selon les revendications 1 à 4 *caractérisé en ce que* son segment (4) à assembler avec le sous-ensemble comporte une bride de fixation (6) carrée pourvue d'au moins trois, plus particulièrement de quatre alésages traversants pour recevoir des vis de fixation et *en ce que* son segment (5) à assembler avec le premier segment (4) comporte une zone (20) saillant radialement par rapport à son axe et pourvue d'un alésage traversant (21) pour le passage d'une vis de fixation (22), ledit alésage étant disposé de façon à s'aligner avec l'un des alésages dans la bride de fixation (6) lorsque les deux segments (4), (5) sont assemblés avec un positionnement réciproque exact.

6. Support de connecteur selon les revendications 1 à 5 *caractérisé en ce que* la zone (20) saillant radialement du second segment (5) coopère avec un socle d'appui du premier segment (4), pourvu d'un alésage traversant.

7. Support de connecteur selon les revendications 1 à 6 *caractérisé en ce que* au moins l'une des vis de fixation coopérant avec le premier segment (4) est constituée d'un goujon fileté (30) pourvu d'un alésage borgne (32) destiné à recevoir un boulon fileté (33) passant à travers l'alésage traversant (21) ménagé dans la zone (20) saillant radialement du segment (5).

8. Support de connecteur selon l'une ou plusieurs des revendications 1 à 7 *caractérisé en ce que* au moins l'une des vis de fixation coopérant avec le premier segment (4) est constitué d'un goujon fileté (34) pourvu d'une goupille filetée (35) passant à travers l'alésage traversant (21) ménagé dans la zone (20) saillant radialement du segment (5).

9. Support de connecteur selon l'une ou plusieurs des revendications précédente*s caractérisé en ce que* dans le cas où le plan de séparation entre les deux parties ou segments du support est déterminé par la bissectrice de l'angle entre lesdits segments et où les surfaces de séparation sont lisses, lesdites surfaces de séparation présentent une projection horizontale de forme sensiblement en étoile avec une ouverture centrale de passage de forme ovale, les pointes de ladite étoile étant tronquées par une ligne droite.

10. Support de connecteur selon le revendications 1 et 2 *caractérisé en ce que* l'un des segments du support comporte un nez formant l'une des moitiés d'une articulation, une partie constituée d'une plaque plane de part et d'autre étant raccordée à l'autre segment dans la zone d'au moins l'une des pointes de sa projection horizontale en étoile.
